# EUROPEAN PATENT SPECIFICATION

(11) **EP 4 245 961 B1**
(45) Date of publication and mention of the grant of the patent: **24.12.2025**
(21) Application number: 20960987.4
(22) Date of filing: 13.11.2020
(51) Int. Cl.: E21D 9/00, G05D 1/00, G06T 7/20, G06T 7/70, H04N 13/204, G06V 20/56, E21D 21/00

(54) **SYSTEM AND METHOD FOR THE ROBOTIC LOADING OF EXPLOSIVES IN UNDERGROUND MINING**
SYSTEM UND VERFAHREN ZUM ROBOTISCHEN LADEN VON SPRENGSTOFFEN IM UNTERTAGEBERGBAU
SYSTÈME ET PROCÉDÉ POUR LE CHARGEMENT ROBOTIQUE D'EXPLOSIFS DANS L'EXPLOITATION MINIÈRE SOUTERRAINE

(43) Date of publication of application: 20.09.2023
(73) Proprietor: Enaex Servicios S.A., Las Condes, Santiago (CL)
(72) Inventor: RUIZ HERNÁNDEZ, Marco Antonio, Santiago (CL); MIRANDA LORCA, Rodrigo, Santiago (CL); BARRIGA MELGAREJO, Jonhatan, Santiago (CL); LARA MARRO, Gloria del Pilar, Santiago (CL); MORALES GARRIDO, Danko Christian, Santiago (CL); PRADO FIGUEROA, Felipe Andrés, Santiago (CL)
(74) Representative: Garavelli, Paolo
(86) International application number: PCT/CL2020/050153
(87) International publication number: WO 2022/099428

(56) References cited:
- WO-A1-2015/106799
- SE-A1- 1 450 819
- SE-A1- 1 450 819
- US-A1- 2012 239 191
- US-A1- 2017 356 292
- US-B2- 10 341 639
- US-B2- 10 349 035
- US-B2- 10 349 035
- ORICA: "Mechanised Development Charging", 20 August 2020 (2020-08-20), XP093176569, Retrieved from the Internet <URL:https://www.youtube.com/watch?v=1XKG7nI6rdg> [retrieved on 20240619]
- ROBOTICS AND AUTONOMOUS SYSTEMS GROUP CSIRO DATA61: "Automated Explosive Loading", YOUTUBE, XP055938221, Retrieved from the Internet <URL:https://www.youtube.com/watch?v=gJkT60sN1GQ>

## Description

### FIELD OF THE INVENTION

The present invention relates to systems and equipment used for tunnel development, and more specifically to different technologies associated with drilling and blasting. In particular, a robotic system for loading explosives in underground drilling and blasting is described.

### BACKGROUND OF THE INVENTION

Many high-risk tasks are currently carried out in person in the mining industry with the assistance of multiple workers, who must work in dangerous areas. In the case of explosives loading in underground mining, tasks must be carried out by crews of workers at the blasting site, where such tasks include, for example, inspection and cleaning of the front and the respective boreholes, priming tasks and insertion of detonators and explosives in each borehole and the connection of all detonators.

Each of the above-mentioned tasks constitutes a high risk for personnel due to multiple reasons. First of all, these tasks are performed manually at the blasting front, exposing personnel to possible rock falls or bursts or other events that can cause serious injuries to personnel, such as cuts, bruises, fractures, and even death in the most serious cases.

On the other hand, there are other risks associated with the presence of personnel in blasting areas. For example, after each blasting there is a ventilation period that can vary from 1 to 5 hours, depending on the conditions of each mine and the level of existing gases, during which personnel cannot access the area. These ventilation times involve a period of non-activity in the area, which turns into a productivity reduction.

Along the same lines, there are areas in mining sites that are unstable and have the potential for landslides, which prevents personnel from accessing these areas to mine the ore. Thus, the mine productivity is significantly reduced, since even when there are areas with valuable resources, many of these areas remain unexploited due to the high risk to personnel.

The need to carry out the mentioned tasks of loading explosives by hand requires the collaboration of multiple operators and personnel trained to handle explosives. Commonly, a drilling machine carries out the perforation of the boreholes in the front to be drilled based on a pre-planned blasting plan. A crew of operators then enters the area to load the explosives and performs a visual inspection of the condition of the blasting front. In the event that the front is very dirty, the operators clean it manually, clearing the base with shovels to unclog the boreholes that could have been obstructed. Once this task is finished, the operators must manually insert the detonators into the respective boosters or "boosters" (priming operation) and then insert each set into the corresponding borehole. This insertion action is commonly carried out by pushing a bar or long wooden rod, trying to leave the detonator cable outside the borehole for the subsequent blasting thereof.

Furthermore, many of the boreholes are located above ground, so they shall be loaded with the aid of an elevator commonly known as a "manlift", which lifts the operator to reach the height of the upper boreholes, which can be up to 8 meters high. Once this task is completed, a new crew enters to load a blasting agent (or ANFO) into each borehole, covering each primer and thus completing the explosive charge. Finally, the cables are tied together to be operationally connected to a main cable or "fuse", which will be in charge of starting the blast.

As can be seen from the above description, currently the complete process of loading explosives involves a large amount of tasks that shall be carried out by multiple people - duly qualified for these actions. All these efforts result in a large number of man-hours and high risks for the personnel involved in these operations, and even their lives may be compromised.

Documents Orica: "Mechanised Development Charging", 20 August 2020 (2020-08-20), XP093176569, Retrieved from the Internet; URL: https://www.youtube.com/watch?v=1XKG7nl6rdg; SE-A1-1 450 819; US-B2-10 349 035 and US-A1-2017/356292 disclose systems for operating in underground mines.

Due to these limitations, there is a need in the current state of the art for a system that can carry out all the tasks associated with the loading of explosives autonomously, semi-autonomously or by remote operation, so as to completely avoid the intervention of people in the blasting area.

### BRIEF DESCRIPTION OF THE INVENTION

To overcome the above-mentioned drawbacks, a system for loading explosives in underground mining is provided according to claim 1, which can be operated autonomously, semi-autonomously or by remote operation, said system comprising:
a positioning subsystem comprising means for moving the system by autonomous or semi-autonomous navigation or by remote operation;
a subsystem for cleaning a base, which comprises means for removing unwanted elements that may obstruct the operation of loading explosives in the boreholes;
a subsystem for scanning a loading surface, which comprises detection means for detecting boreholes in a drilled surface and assigning a location for each borehole;
a borehole drilling subsystem comprising means for determining physical parameters of each borehole;
a priming and loading subsystem comprising means for loading a booster, detonator, and other explosive materials, placing them at each borehole;
a subsystem for loading the blasting agent, which comprises means for supplying a blasting agent once the explosives have been placed in each borehole;
a borehole-sealing subsystem comprising means for covering each borehole once the explosives have been loaded;
a detonation subsystem comprising means for detonating each borehole loaded with explosives, and
a control subsystem that communicates with each of the other subsystems.

The system for loading explosives can be implemented in all types of underground workings or underground mining applications involving explosives, such as front loading, vertical loading or ditching.

In those applications in which the invention is implemented on a front, the system may further comprise a mesh opening and guiding subsystem in those cases where a reinforcement mesh is provided with the boreholes on the front, in order to allow the operation of the different elements of the system through the mesh.

In this way, by using the above-described configuration it is possible to carry out each of the explosives loading tasks, from start to finish, without the intervention of personnel in the blasting area. Thus, the described system can operate either completely autonomously, semi-autonomously or through remote operation by duly trained personnel.

In relation to the current state of the art, the developed system allows eliminating the risks associated with the manual execution of each of the explosives loading tasks completely, which are related, for example, to possible rock falls and explosions or exposure to gases in the blasting zones, etc. Furthermore, since the system is not affected by the presence of post-blasting gases, it can operate in period of times that are within the ventilation period, which can significantly increase the productivity periods.

Another fundamental advantage of the present invention in relation to the current state of the art is the possibility of accessing areas that are considered unstable, which are currently inaccessible due to potential risks for personnel. The possibility of the system of being able to access these areas can represent a significant increase in the mine productivity, since it opens the possibility of exploiting valuable resources that are currently unavailable.

On the other hand, although in the state of the art it is possible to find automated systems that facilitate some of the operations related to the loading of explosives such as drilling equipment, equipment for the loading of blasting agents, elevators, etc., this equipment only allows solving - in an automated way, some of the operations related to the loading of explosives. In contrast, the present invention allows gathering in a single system a plurality of elements that act together and synergistically to carry out each and every one of the tasks necessary to complete the loading of explosives, without exposing persons to potential risks.

### BRIEF DESCRIPTION OF THE FIGURES

Figure 1 shows an isometric view of one of the embodiments of the system for loading explosives of the present invention.
Figure 2 shows a side elevation view of a configuration of the system for the loading of explosives of the present invention.
Figure 3 shows an enlarged view of a section of the system configuration for loading explosives of Figure 2.

### DETAILED DESCRIPTION OF THE INVENTION

According to the embodiments shown in the attached figures, the present invention consists of a system (100) for loading explosives on a loading surface (200) of underground mining, which can be operated autonomously, semi-autonomously or by remote operation, and comprises:
a positioning subsystem comprising means for moving the system by autonomous or semi-autonomous navigation or by remote operation;
a subsystem for cleaning a base, which comprises means for removing unwanted elements that may obstruct the operation of loading explosives in the boreholes;
a subsystem for scanning a loading surface, which comprises detection means for detecting boreholes in a drilled surface and assigning a location for each borehole;
a borehole drilling subsystem comprising means for determining physical parameters of each borehole;
a subsystem for cleaning boreholes comprising means for cleaning each borehole in order to proceed with the loading of explosives;
a priming and loading subsystem comprising means for loading a booster, detonator, and other explosive materials, placing them at each borehole;
a subsystem for loading the blasting agent, which comprises means for supplying a blasting agent once the explosives have been placed in each borehole;
a borehole-sealing subsystem comprising means for covering each borehole once the explosives have been loaded;
a detonation subsystem comprising means for detonating each borehole loaded with explosives; and
a control subsystem that communicates with each of the other subsystems and controls each element for loading and detonating the explosives.

The invention can be implemented in all types of underground workings or underground mining applications involving explosives. However, for illustrative purposes the detailed description of the invention will be carried out in terms of the attached figures, which refer to the loading of explosives in a front (200) of underground mining.

In this way, in preferred embodiments of the invention the system may further comprise a mesh guiding and opening subsystem in those cases where a reinforcement mesh is provided with the boreholes on the front, in order to allow the operation of the several elements of the system through the mesh. Particularly, the mesh guiding and opening subsystem may preferably comprise a device in the form of a speculum (not shown in the Figures) which consists of two or more pieces that are opened by a driving mechanism, thereby deforming the mesh, and creating the space for passing the elements of the system that are used for loading the explosive. This system may also include a cutting tool in case there is not enough space for the insertion of the speculum.

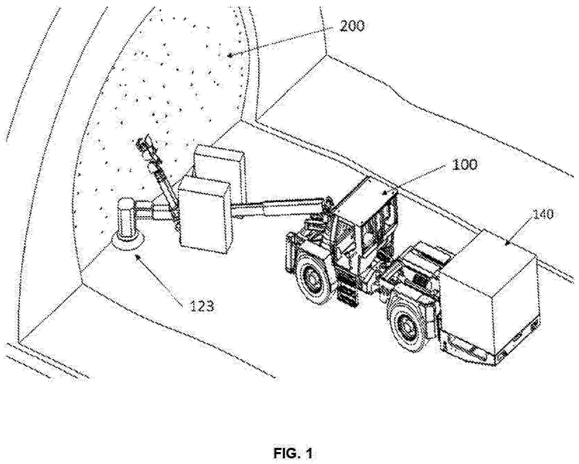

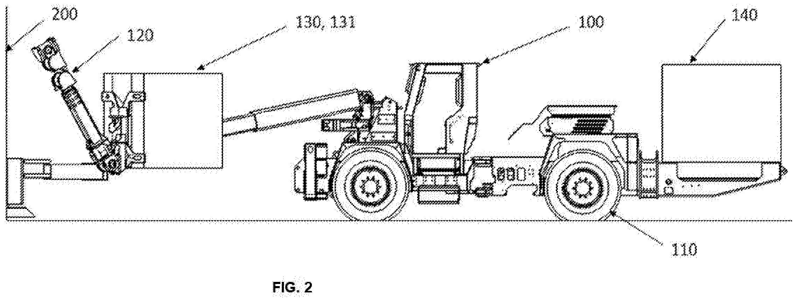

As shown in Figures 1 and 2, the positioning subsystem comprises means for moving (110) the complete system, for example, being arranged in a vehicle operated by autonomous navigation, which can be moved by wheels or tracks, and can be powered by electricity, fuel or by the use of batteries. Furthermore, the positioning subsystem comprises means for moving and placing different elements that conform the system for loading explosives, such as for example the use of robotic arms (120) and hoses (not shown in the figures) which can be driven through hydraulic, pneumatic, or electrical systems.

The positioning subsystem communicates with the control subsystem, which has a map of the blasting zone in which the system is operating, and from this map the positioning subsystem allows the driving of different means to move each of the elements that are necessary for the different tasks. In this way, the positioning subsystem allows the movement of the complete system autonomously within the underground work site, by using the map provided by the control subsystem.

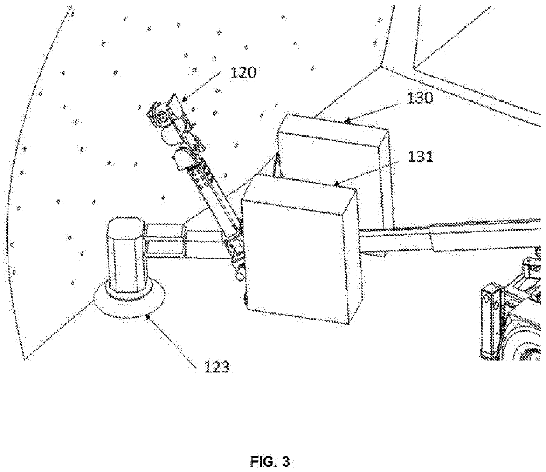

In turn, as shown in Figures 1 and 3, the subsystem for cleaning the base comprises means (123) that allow the removal of debris or residues from the boreholes, which exist in the base or lower area of the front (commonly referred to as the "lifter") in order to clear the boreholes that may be obstructed by such debris. Preferably, the means for cleaning debris may comprise the use of hoses supplying pressurized water and/or air, or such means may comprise the use of moving elements, such as moving brushes that remove debris.

The front scanning subsystem comprises the use of sensors that allow a three-dimensional scanning of the loading front, which allow detecting each individual borehole. Even in cases where a wire mesh safety screen is placed to prevent rockslides, the front scanning subsystem is able to detect boreholes through the mesh. Through this scanning the subsystem detects each borehole and assigns them a location within a digital model.

In particular, the subsystem may include the use of LIDAR sensors, TOF sensors, cameras, and others, which may be moved by hydraulic arms, wherein the arm is capable of being moved in different positions in order to carry out the scanning of the entire front. In this way, the sensor(s) used can be arranged in different locations within the system, and preferably they are placed at the base of the robotic arm(s) (120).

In a preferred embodiment of the invention, the subsystem performs a general scan of the front using one or more LIDAR sensors and a supporting camera to assign the location of the boreholes. Subsequently, the scanning subsystem divides the front into sectors, and the robotic arm on which the scanning subsystem is mounted is placed in front of each sector. At this point a scan of the specific sector selected by using the LIDAR sensor and the support camera is carried out, and then the scan results are compared with a pre-existing borehole diagram from the drilling stage. In the event that discrepancies are detected after such a comparison, for example, in case the sensor did not detect a borehole present in the pre-existing diagram, the front scanning subsystem uses the TOF sensor or camera. In this case, the TOF sensor is placed closer to the area, where the undetected borehole should be, in order to identify the same.

In relation to the borehole drilling subsystem, this preferably comprises the use of an inertial sensor that allows establishing parameters such as the length and inclination of the borehole.

Preferably, the borehole cleaning subsystem also comprises means to identify the state of cleanliness of each borehole and to clean each borehole, in order to proceed with the loading of explosives.

As shown in more detail in Figures 2 and 3, the priming and loading subsystem preferably comprises the use of a priming device (not shown in the figures), one or more robotic arms (120), one or more pushing means, a booster container or "boosters" (130) and a detonator container (131). Preferably, the priming device may be located on the robotic arm or in an area adjacent thereto, and the same robotic arm is responsible for taking a booster from a booster container (130) to place the same in the priming device, and subsequently removing a detonator from a detonator container (131) to place it in front of the booster in the priming device to then locate the primed object at the end of the robotic arm. In this way, the priming and loading subsystem comprises a specialized mechanism that allows carrying out the "priming" operation consisting of properly coupling the detonator with the respective booster, once both components are located in the priming device. Subsequently, by means of the robotic arm (120) the primer is placed inside a respective borehole in the front, and the same is pushed by means of the pushing means, then the blasting agent is loaded, and a detonator antenna is placed outside the borehole, which is intended to be subsequently used by the detonation subsystem. Preferably, the pushing means corresponds to a flexible hose; however, other means are contemplated within the invention, such as rods or others.

In preferred embodiments of the invention, the priming and loading subsystem may further comprise the loading of additional explosive elements, such as for example dynamite-type explosives. In this embodiment, the priming and loading subsystem places different dynamite devices in the boreholes at the ends of the front referred to as the "crown" of the front. In these boreholes, the priming and loading subsystem places the dynamite devices inside the boreholes after loading the primer instead of loading a blasting agent.

The dynamite devices commonly consist of elongated cartridges that are connected to each other in series, covering a large part of the length of the borehole. In this way, the priming and loading subsystem comprises means that allow the dynamite devices to be connected in series, one after the other, and that also allow the insertion of the same in each borehole. The number of dynamite devices to be connected depends on the length of each borehole.

In those boreholes where dynamite devices are not inserted, the subsystem for loading the blasting agent acts, which preferably can use the same hose used in the explosives loading for the supply of a blasting agent to each borehole of the front. For this purpose, the subsystem for loading the blasting agent comprises blasting-agent container means, and pressurization means that allow the supply of blasting agents through the hose. In this way, after the priming and loading subsystem has properly placed the primer or explosive elements, the hose is actuated to move backwards into each borehole, at the same time as the blasting agent is being delivered through the hose.

As shown in Figures 1 and 2, the subsystem for loading the blasting agent preferably further comprises a system for preparing the blasting agent (140), which is intended to house the necessary components for preparing the blasting agent, preparing the mixture of blasting agents, and allow the supply of blasting agent to each of the boreholes in the front. In this way, the system for preparing the blasting agent (140) allows the on-site manufacture of the blasting agent or ANFO (Ammonium Nitrate-Fuel Oil), with any type of components required and in any of the proportions necessary for a given operation.

The system for the manufacture of the blasting agent (140) preferably comprises containers housing the components for the manufacture of the blasting agent or a single container comprising internal divisions to house the various components within respective compartments. The system further comprises pumping means, which provide the necessary pressure for the transfer of the components to a mixing means, and which subsequently allow the prepared mixture to be transferred to each of the boreholes in the front. Once the mixing process is completed, the already-prepared blasting agent can be transferred through the respective hoses to the front boreholes with the help of the robotic arms (120).

The system for preparing the blasting agent (140) further communicates with the control subsystem, which allows the programmable control of the preparation process of blasting agent. In this way, by using the control subsystem, the blasting agent can be prepared and supplied automatically, by local or remote operation.

The borehole sealing subsystem consists of the utilization of means that allow the introduction of inert material, which may preferably consist of some type of foam, or other type of materials. In this way, said means cover the exposed end of each borehole, thus generating a seal or plug after the operation of loading explosives is finished. The means used in this subsystem are preferably placed at the end of the robotic arm (120).

Preferably, the detonation subsystem consists of a wireless detonation system, which comprises a detonator antenna activator. In particular, the detonation subsystem comprises means that enable activation of the antennas located on each of the detonators of each borehole, such as through optical means, such as a coded light beam or by means of any other type of wireless signal, thus providing the delay information of each detonator and performing the detonation from the control subsystem. However, it should be taken into consideration that the invention also includes the possibility of carrying out wired detonation processes, in general.

Furthermore, while the various subsystems have been described in terms of the use of a robotic arm (120) comprising means necessary to execute the operations of explosives loading at the front of the underground workings, the system may optionally comprise the use of two or more robotic arms that can operate simultaneously, so as to allow simultaneous or programmed explosives loading in different boreholes.

The present invention further comprises a process for the loading of explosives in an underground mining site, the process comprising the steps of:
a) positioning the system for loading explosives inside an underground mining site by means of semi-autonomous or autonomous navigation, or by remote operation;
b) carrying out a process for cleaning the base of the front in order to remove unwanted elements that may obstruct the entry of explosives into the boreholes;
c) scanning the loading surface to detect each borehole and assign a location for each of them;
d) performing an evaluation of the interior of each borehole in order to establish physical parameters thereof;
e) carrying out a priming operation by combining detonators with respective boosters and loading each primer into a respective borehole;
f) positioning a detonator antenna outside each borehole;
g) loading a blasting agent into each borehole and executing a sealing operation of each borehole, positioning then an antenna at the end of each borehole, and
h) activating the antennas of each detonator by means of a wireless signal so as to cause the detonation in each borehole.

Additionally, the process comprises the step of executing a mesh opening, in those cases where a reinforcement mesh is provided over the front with the boreholes, in order to allow the operation of the various elements of the system through the mesh. In particular, the step of executing a mesh opening comprises the use of a device in the form of a speculum, which allows deforming the mesh and creating enough space so that the various elements of the system used for loading the explosives can pass through. Furthermore, this step may include the action of cutting a section of the mesh, in the event that there is insufficient space for the insertion of the speculum.

Preferably, the step of positioning the system for loading explosive comprises the actuation of means for the mobilization of the system based on a map of the blasting zone provided by the control subsystem, thus allowing the movement of the complete system within the underground mining site autonomously.

Similarly, the process for cleaning the front base comprises the actuation of means that allow the removal of debris or residues from boreholes present at the base or lower area of the front, in order to clear the boreholes that may be obstructed by such debris.

The front scanning process includes the steps of using sensors to perform a three-dimensional scan of the loading front to detect each borehole and assign a location to them. In particular, this process includes the specific steps of.
a) carrying out a general scan of the front using LIDAR sensors and a back-up camera to map the location of the boreholes;
b) dividing the front into sectors and placing the sensors in each sector in order to scan the specific sector;
c) comparing the scan results with a pre-existing borehole diagram; and
d) in the event that discrepancies are detected, using a sensor or TOF camera that is available closer to the area where the discrepancy was found, in order to identify a borehole.

Concerning the step of performing an evaluation of the interior of each borehole, this includes the step of using an inertial sensor to establish physical parameters of the borehole, such as borehole length and inclination, and supplying pressurized air to perform a cleaning of each borehole.

Furthermore, the step of performing an evaluation of the interior of each borehole preferably includes the step of identifying the cleanliness state of each borehole and cleaning each borehole to proceed with the loading of explosive. In this embodiment, flexible elements can be used, such as, for example, hoses to supply pressurized fluid, such as water or air/water mixtures.

In relation to the priming and loading process, this includes the steps of:
a) taking a booster and a detonator from their respective containers to place them in a priming device;
b) using a specialized mechanism that allows carrying out the operation of priming, properly coupling the detonator with the respective booster;
c) positioning each primer inside a respective borehole, and push it through a loading hose; and
d) positioning a detonator antenna on the outside of each borehole.

Furthermore, in optional embodiments of the invention, the priming and loading process includes the steps of:
e) taking a dynamite device from a container;
f) coupling two or more dynamite-type devices in series, depending on the amount of recorded length of each borehole;
g) inserting dynamite devices into selected boreholes at the ends of the front.

In those boreholes in which dynamite devices are not inserted, the step of loading a blasting agent is carried out, which includes the actuation of means for supplying a blasting agent in each borehole through the loading hose. Furthermore, the sealing operation of each borehole consists in the use of means that introduce inert material covering the exposed end of each borehole, thus generating a seal or plug after the operation of loading explosives is finished.

## Claims

1. A system (100) for loading explosives into a loading surface(200) of an underground mining site that comprises:
- a positioning subsystem comprising means for moving (110) the system (100);
- a loading-surface cleaning subsystem comprising means (123) for removing unwanted elements that may obstruct the operation of loading explosives in the boreholes;
- a scanning subsystem of the loading surface (200) comprising detection means for detecting boreholes in the drilled surface and assigning a location for each borehole;
- a borehole drilling subsystem comprising means for determining physical parameters of each borehole;
- a borehole cleaning subsystem comprising means for cleaning each borehole to proceed with the loading of explosives;
- a priming and loading subsystem comprising means for loading a booster, detonator and/or other explosive materials, placing them in each borehole, and positioning a detonator antenna outside of an exposed end of each borehole;
- a subsystem for loading a blasting agent (140) comprising means for supplying a blasting agent (140) after explosives have been placed in each borehole;
- a borehole sealing subsystem comprising means for covering the exposed end from each borehole, generating a seal or plug after the operation of loading explosives is finished;
- a detonation subsystem comprising means for detonating each borehole loaded with explosives; and
- a control subsystem that communicates with each of the other subsystems and controls each of the elements for loading and detonating the explosives.

2. A system (100) according to claim 1, **CHARACTERIZED in that** it further comprises a mesh guiding and opening subsystem for those cases in which a reinforcement mesh is provided on the loading surface (200), which allows the operation of the different elements of the system through the mesh.

3. A system (100) according to claim 2, **CHARACTERIZED in that** the mesh guiding and opening subsystem comprises a device in the form of a speculum consisting of two or more pieces that are opened by a driving mechanism, deforming the mesh, and creating space for system elements to pass through.

4. A system (100) according to claim 3, **CHARACTERIZED in that** the mesh opening and guiding subsystem further comprises a cutting tool, for those cases where there is insufficient space for insertion of the speculum-shaped device.

5. A system (100) according to claim 1, **CHARACTERIZED in that** the positioning subsystem comprises a vehicle operated by autonomous or semi-autonomous navigation, or by remote operation, and comprises means for moving (110) and placing the various elements comprising the system for loading explosives.

6. A system (100) according to claim 5, **CHARACTERIZED in that** the positioning subsystem operates by utilizing a map of the area, which is provided by the control subsystem, from which the positioning subsystem actuates various elements to move the system autonomously or semi-autonomously within the underground mining site.

7. A system (100) according to claim 1, **CHARACTERIZED in that** the loading-surface cleaning subsystem comprises means (123) for removing debris or residue at the base or bottom area of the surface

8. A system (100) according to claim 7, **CHARACTERIZED in that** the means (123) for cleaning debris are selected from a group consisting of the use of hoses supplying pressurized water and/or air, or the use of movable elements in the form of brushes and/or shovels.

9. A system (100) according to claim 1, **CHARACTERIZED in that** the scanning subsystem of the loading surface (200) comprises sensors that scan the surface three-dimensionally, and detect each borehole and assign a location within a digital model.

10. A system (100) according to claim 9, **CHARACTERIZED in that** the sensors are moved by robotic arms (120), wherein the arm moves in different positions to scan the entire surface.

11. A system (100) according to claim 10, **CHARACTERIZED in that** the subsystem includes the use of LIDAR sensors, TOF sensors, cameras, and others.

12. A system (100) according to claim 1, **CHARACTERIZED in that** the borehole drilling subsystem comprises an inertial sensor that establishes parameters such as borehole length and inclination, wherein the sensor is placed at the end of a drilling element that allows various measurements to be made as the sensor is inserted into each borehole.

13. A system (100) according to claim 12, **CHARACTERIZED in that** the borehole cleaning subsystem comprises means for identifying the state of cleanliness of each borehole and for cleaning each borehole to proceed with the loading of explosives.

14. A system (100) according to claim 1, **CHARACTERIZED in that** the priming and loading subsystem comprises a priming device, one or more robotic arms (120), a boostercontainer (130), and a detonator container (131), wherein the robotic arm (120) takes a booster from the booster container (130) to place the same in the priming device, and takes a detonator from the detonator container (131) to place it in front of the booster in the priming device, to carrying out a priming operation and then place the primed object at the end of the robotic arm.

15. A system (100) according to claim 14, **CHARACTERIZED in that** the priming and loading subsystem further comprises a mechanism that carries out the priming operation, which couples the detonator with the booster inside the priming device.

16. A system (100) according to claim 15, **CHARACTERIZED in that** the robotic arm positions the primed object to the interior of a borehole in the surface by using pushing means that push the primed object into the borehole.

17. A system (100) according to claim 14, **CHARACTERIZED in that** the priming and loading subsystem further comprises loading dynamite-type explosive element, wherein the priming and loading subsystem positions the dynamite elements in the boreholes at the ends of the surface and includes means for serial insertion and connection of different dynamite-type devices in each borehole.

18. A system (100) according to claim 16, **CHARACTERIZED in that**, after the primed object has been placed, the loading subsystem of a blasting agent (140) actuates a hose to move back in the borehole and simultaneously supplies a blasting agent (140), loading the blasting agent (140) as the hose is withdrawn from the borehole.

19. A system (100) according to claim 18, **CHARACTERIZED in that** the subsystem for loading the blasting agent (140) comprises blasting-agent containers and pressurization means that allow supplying the blasting agent (140) through the hose.

20. A system (100) according to claim 18, **CHARACTERIZED in that** the subsystem for loading the blasting agent (140) comprises a system for preparing the blasting agent (140) comprising means for housing the components required for the manufacture of the blasting agent (140), preparing the mixture of said components, and allowing the supply of the blasting agent (140) to each borehole on the surface.

21. A system (100) according to claim 20, **CHARACTERIZED in that** the system for preparing the blasting agent (140) comprises containers that house the components for manufacturing the blasting agent (140), mixing means, and pumping means that allow the components to be transferred to the mixing means and to transfer the mixture to each borehole at the surface.

22. A system (100) according to claim 21, **CHARACTERIZED in that** the system for preparing the blasting agent (140) further comprises hoses that enable the transfer of the prepared blasting agent (140) towards the boreholes on the surface, with the aid of the robotic arms (120).

23. A system (100) according to claim 22, **CHARACTERIZED in that** the system for preparing the blasting agent (140) communicates with the control subsystem, which allows to automatically control the process of blasting agent preparation.

24. A system (100) according to claim 1, **CHARACTERIZED in that** the borehole sealing subsystem comprises means that introduce inert material covering the exposed end of each borehole, generating the seal or plug after the operation of loading explosives is finished.

25. A system (100) according to claim 24, **CHARACTERIZED in that** the means covering each borehole are placed at the end of a robotic arm.

26. A system (100) according to claim 1, **CHARACTERIZED in that** the detonation subsystem comprises means that enable the activation of the detonator antennas that are placed on the detonators on the outside of each borehole.

27. A system (100) according to claim 26, **CHARACTERIZED in that** the detonation subsystem comprises the use of wireless and wired detonation systems.

28. A system according to claim 26, **CHARACTERIZED in that** the used means are based on optical signals, through a coded light beam, or other types of wireless signals.

29. A process for loading explosives in a loading surface (200) of an underground mining site, the process comprises the steps of
- positioning a system for loading explosives inside an underground mining site according to any of claims 1-24;
- carrying out a process for cleaning the base of the loading surface (200) in order to remove unwanted elements that may obstruct the entry of explosives into the boreholes;
- scanning the loading surface (200) to detect each borehole and assign a location for each of them;
- performing an evaluation of the interior of each borehole in order to establish physical parameters thereof;
- carrying out a priming operation by combining detonators with boosters and loading each primer into a respective borehole;
- positioning a detonator antenna outside of an exposed end of each borehole;
- loading a blasting agent (140) into each borehole and executing a sealing operation of each borehole covering an end exposed from each borehole generating a seal or plug,
and
- activating the detonator antennas by means of a wireless signal so as to cause the detonation in each borehole.

30. A process according to claim 29, **CHARACTERIZED in that** it further comprises the step of executing a mesh opening, in those cases in which a reinforcement mesh is provided with the boreholes on the front, which allows the operation of the different elements of the system through the mesh.

31. A process according to claim 30, CHARACTERIZED the step of making a mesh opening comprises deforming the mesh by means of a device in the form of a speculum, or cutting a section of the mesh so as to create a space through which the various elements of the system used for loading explosives can pass.

32. A process according to claim 29, **CHARACTERIZED in that** the step of positioning the system for loading explosives comprises actuating means for moving (110) the system by virtue of a map of the blasting zone provided by the control subsystem.

33. A process according to claim 29, **CHARACTERIZED in that** the process of cleaning the base of the loading surface (200) comprises actuating means for removing drilling debris or residues in the base or lower zone of the loading surface (200).

34. A process according to claim 29, **CHARACTERIZED in that** the process of scanning the loading surface (200) includes the steps of using sensors to scan the loading surface (200) three-dimensionally to detect each borehole and assigning a location to the same.

35. A process according to claim 34, **CHARACTERIZED in that** the process of scanning the loading surface (200) includes the steps of:
- carrying out a general scan of the surface using LIDAR sensors and a back-up camera in order to assign the location of the boreholes;
- dividing the surface into sectors and placing the sensors in each sector in order to scan the specific sector;
- comparing the scan results with a pre-existing borehole diagram; and
- in the event that discrepancies are detected, using a sensor or TOF camera that is available closer to the area where the discrepancy was found, in order to identify a borehole.

36. A process according to claim 29, **CHARACTERIZED in that** the step of performing an evaluation of the interior of each borehole includes the step of using an inertial sensor to establish physical parameters of the borehole and supplying pressurized fluid such as water or a mixture of water and air to perform a cleaning of each borehole.

37. A process according to claim 29, **CHARACTERIZED in that** the priming and loading process includes the steps of:
- taking a booster and a detonator from their respective containers to place them in a priming device;
- using a mechanism that allows carrying out the operation of priming, properly coupling the detonator with the respective booster;
- positioning each primer inside a respective borehole, and push it through a loading hose; and
- positioning a detonator antenna on the outside of each borehole.

38. A process according to claim 29, **CHARACTERIZED in that** the priming and loading process further comprises the steps of:
- taking a dynamite device from a container;
- coupling two or more dynamite-type devices in series, depending on the amount of recorded length of each borehole;
- inserting dynamite devices into selected boreholes at the ends of the front.

39. A process according to claim 37, **CHARACTERIZED in that** the step of loading a blasting agent (140) comprises actuating means for supplying a blasting agent (140) to each of the boreholes through the hose used in loading explosives.

40. A process according to claim 29, **CHARACTERIZED in that** the sealing operation of each borehole consists of using means that introduce inert material covering the exposed end of each borehole, generating a seal or plug after the operation of loading explosives is finished.

## Patentansprüche

1. Eine System (100) zum Beladen von Sprengstoffen in eine Ladefläche (200) unterirdische Bergwerksanlage das umfasst:
- ein PositionierungssubSystem, das Mittel zum Bewegen (110) des System (100);
- ein TeilSystem zur Reinigung der Ladefläche, das Mittel (123) zur Entfernung unerwünschter Elemente umfasst, die den Vorgang des Ladens von Sprengstoffen in den Bohrlöchern behindern könnten;
- ein AbtastteilSystem der Ladefläche (200) umfassenden Detektionseinrichtung zum Erkennen von Bohrlöchern in der gebohrten Oberfläche und zum Zuordnen einer Position für jedes Bohrloch;
- ein BohrlochbohrSystem mit Mitteln zur Bestimmung der physikalischen Parameter jedes Bohrlochs;
- ein BohrlochreinigungsSystem mit Mitteln zur Reinigung jedes Bohrlochs, um mit dem Laden von Sprengstoff fortfahren zu können;
- ein Zünd- und BeladungsSystem mit Mitteln zum Laden eines Boosters, eines Zünders und/oder anderer explosiver Materialien und deren Platzierung in jedem Bohrloch , and positioning a detonator antenna outside of an exposed end of each borehole;
- ein TeilSystem zum Laden einer Sprengmittel (140) zur Zufuhr von Sprengmittel (140)Sprengstoff, nachdem dieser in jedes Bohrloch eingebracht wurde;
- ein BohrlochabdichtungsSystem mit Mitteln zum Abdecken the exposed end from jedes Bohrlochs , generating a seal or plugnach Abschluss des Sprengstoffladevorgangs;
- ein DetonationssubSystem mit Mitteln zur Detonation jedes mit Sprengstoff gefüllten Bohrlochs; und
- ein KontrollsubSystem, das mit jedem der anderen SubSysteme kommuniziert und jedes der Elemente zum Laden und Zünden der Sprengstoffe steuert.

2. System (100) nach Anspruch 1, **dadurch gekennzeichnet, dass** es ferner ein Netzführungs- und Öffnungssubsystem für die Fälle umfasst, in denen ein Bewehrungsnetz auf dem vorgesehen ist Ladefläche (200), welches die Betätigung der verschiedenen Elemente des System durch das Netz ermöglicht.

3. System (100) nach Anspruch 2, **dadurch gekennzeichnet, dass** das Teilsystem zum Führen und Öffnen des Siebs eine Vorrichtung in Form eines Spiegels umfasst, der aus zwei oder mehr Teilen besteht, die durch einen Antriebsmechanismus geöffnet werden, wodurch das Sieb verformt und ein Raum für System (100) den Durchtritt von Elementen geschaffen wird.

4. System (100) nach Anspruch 3, **dadurch gekennzeichnet, dass** das Teilsystem zum Öffnen und Führen des Siebs ferner ein Schneidwerkzeug umfasst, für den Fall, dass nicht genügend Platz zum Einführen der spekulumförmigen Vorrichtung vorhanden ist.

5. System (100) nach Anspruch 1, **dadurch gekennzeichnet, dass** das Positionierungssystem ein Fahrzeug umfasst, das durch autonome oder halbautonome Navigation oder durch Fernsteuerung betrieben wird, und Mittel zum Bewegen (110) und Platzieren der verschiedenen Elemente umfasst, die das System (100) zum Laden von Sprengstoffen vorgesehene System enthalten.

6. System (100) nach Anspruch 5, **dadurch gekennzeichnet, dass** das Positionierungssubsystem unter Verwendung einer vom Steuerungssubsystem bereitgestellten Karte des Gebiets arbeitet, anhand derer das Positionierungssubsystem verschiedene Elemente betätigt, um sich System (100) autonom oder halbautonom innerhalb des unterirdischen Bergwerks zu bewegen.

7. System (100) nach Anspruch 1, **dadurch gekennzeichnet, dass** das Reinigungsteilsystem für die Ladefläche Mittel (123) zum Entfernen von Ablagerungen oder Rückständen im unteren Bereich der Oberfläche umfasst.

8. System (100) nach Anspruch 7, **dadurch gekennzeichnet, dass** die Mittel zur Beseitigung von Ablagerungen ausgewählt sind aus einer Gruppe bestehend aus der Verwendung von Schläuchen, die unter Druck stehendes Wasser und/oder Luft liefern, oder der Verwendung von beweglichen Elementen in Form von Bürsten und/oder Schaufeln.

9. System (100) nach Anspruch 1, **dadurch gekennzeichnet, dass** das Scansystem Ladefläche (200) Sensoren umfasst, die die Oberfläche dreidimensional abtasten und jedes Bohrloch erkennen und ihm eine Position innerhalb eines digitalen Modells zuweisen.

10. System (100) nach Anspruch 9, **dadurch gekennzeichnet, dass** die Sensoren durch Roboterarme bewegt werden (120), wobei sich der Arm in verschiedenen Positionen bewegt, um die gesamte Oberfläche abzutasten.

11. System (100) nach Anspruch 10, **dadurch gekennzeichnet, dass** das Teilsystem die Verwendung von LIDAR-Sensoren, TOF-Sensoren, Kameras und anderen umfasst.

12. System (100) nach Anspruch 1, **dadurch gekennzeichnet, dass** das Bohrlochbohrsystem einen Trägheitssensor umfasst, der Parameter wie Bohrlochlänge und - neigung erfasst, wobei der Sensor am Ende eines Bohrelements angeordnet ist, das es ermöglicht, verschiedene Messungen durchzuführen, während der Sensor in jedes Bohrloch eingeführt wird.

13. System (100) nach Anspruch 12, **dadurch gekennzeichnet, dass** das Bohrlochreinigungssystem Mittel zur Ermittlung des Reinheitsgrades jedes Bohrlochs und zur Reinigung jedes Bohrlochs vor dem Beladen mit Sprengstoff umfasst.

14. System (100) nach Anspruch 1, **dadurch gekennzeichnet, dass** das Zünd- und Ladesystem eine Zündvorrichtung, einen oder mehrere Roboterarme (120), einen Boosterbehälter (130) und einen Zünderbehälter umfasst (131), wobei der Roboterarm einen Booster aus dem Boosterbehälter entnimmt (130), um ihn in die Zündvorrichtung einzusetzen, und einen Zünder aus dem Zünder-behälter (131) entnimmt, um ihn vor dem Booster in der Zündvorrichtung zu platzieren, um einen Zündvorgang durchzuführen und das gezündete Objekt dann am Ende des Roboterarms abzulegen.

15. System (100) nach Anspruch 14, **dadurch gekennzeichnet, dass** das Zünd- und Ladesystem ferner einen Mechanismus umfasst, der den Zündvorgang durchführt und den Zünder mit dem Booster innerhalb der Zündvorrichtung koppelt.

16. System (100) nach Anspruch 15, **dadurch gekennzeichnet, dass** der Roboterarm das vorbereitete Objekt mittels einer Schubvorrichtung, die das vorbereitete Objekt in das Bohrloch schiebt, im Inneren eines Bohrlochs an der Oberfläche positioniert.

17. System (100) nach Anspruch 14, **dadurch gekennzeichnet, dass** das Zünd- und Ladesystem ferner das Laden von Dynamit-Sprengelementen umfasst, wobei das Zünd- und Ladesystem die Dynamit-Elemente in den Bohrlöchern an den Enden der Oberfläche positioniert und Mittel zum seriellen Einführen und Verbinden verschiedener DynamitVorrichtungen in jedem Bohrloch umfasst.

18. System (100) nach Anspruch 16, **dadurch gekennzeichnet, dass** nach dem Einbringen des vorbereiteten Objekts das Ladesystem eines Sprengmittel (140) Geräts einen Schlauch im Bohrloch zurückbewegt und gleichzeitig einen mit Flüssigkeit versorgt Sprengmittel (140), Sprengmittel (140) wobei der Schlauch beim Herausziehen aus dem Bohrloch geladen wird.

19. System (100) nach Anspruch 18, **dadurch gekennzeichnet, dass** das Teilsystem zum Laden des Sprengmittel (140) Sprengmittels Behälter und eine Druckvorrichtung umfasst, die die Zufuhr des Sprengmittels Sprengmittel (140) durch den Schlauch ermöglicht.

20. System (100) nach Anspruch 18, **dadurch gekennzeichnet, dass** das Teilsystem zum Laden der Komponenten eine Vorrichtung Sprengmittel (140) zur Vorbereitung der Komponenten Sprengmittel (140) umfasst, die die für die Herstellung der Komponenten erforderlichen Komponenten aufnimmt Sprengmittel (140), die Mischung dieser Komponenten vorbereitet und die Zufuhr der Komponenten Sprengmittel (140)zu jedem Bohrloch an der Oberfläche ermöglicht.

21. System (100) nach Anspruch 20, **dadurch gekennzeichnet, dass** die System Sprengmittel (140) Behälter umfasst, die die Komponenten zur Herstellung des Produkts aufnehmen Sprengmittel (140), Mischeinrichtungen und Pumpeinrichtungen, die es ermöglichen, die Komponenten zu den Mischeinrichtungen zu transportieren und die Mischung zu jedem Bohrloch an der Oberfläche zu befördern.

22. System (100) nach Anspruch 21, **dadurch gekennzeichnet, dass** der Systemring ferner Sprengmittel (140)Schläuche umfasst, die den Transport des vorbereiteten Materials Sprengmittel (140)zu den Bohrlöchern an der Oberfläche mit Hilfe der Roboterarme ermöglichen (120).

23. System (100) nach Anspruch 22, **dadurch gekennzeichnet, dass** der System (100) zur Vorbereitung Sprengmittel (140) kommuniziert es mit dem Steuerungssubsystem, welches die automatische Steuerung des Vorbereitungsprozesses ermöglicht Sprengmittel .

24. System (100) nach Anspruch 1, **dadurch gekennzeichnet, dass** das Bohrlochabdichtungssystem Mittel umfasst, die das that introduce inert material Ende of jedes Bohrlochs theabdecken und exposed nach Abschluss des Ladevorgangs von Sprengstoff eine Abdichtung oder einen Verschluss bilden.

25. System (100) nach Anspruch 24, **dadurch gekennzeichnet, dass** die Mittel zum Abdecken jedes Bohrlochs am Ende eines Roboterarms angeordnet sind.

26. System (100) nach Anspruch 1, **dadurch gekennzeichnet, dass** das Detonationssystem Mittel umfasst, die die Aktivierung von the detonator Antennen ermöglichen, die an den Detonatoren an der Außenseite jedes Bohrlochs angebracht sind.

27. System (100) nach Anspruch 26, **dadurch gekennzeichnet, dass** das Detonationssubsystem die Verwendung von drahtlosen und drahtgebundenen Detonationssystemen umfasst.

28. System (100) nach Anspruch 26, **dadurch gekennzeichnet, dass** die verwendeten Mittel auf optischen Signalen, mittels eines codierten Strahls oder anderen Arten von drahtlosen Signalen basieren.

29. Ein Verfahren zum Laden von Sprengstoffen in einer Ladefläche (200)Untertage-Bergbauanlage; das Verfahren umfasst folgende Schritte:
- Positionierung einer Vorrichtung System (100)zum Laden von Sprengstoffen innerhalb einer Untertage-Bergbaustätte gemäß einem der Ansprüche 1-24;
- Durchführung eines Reinigungsverfahrens am Bohrlochgrund, Ladefläche (200)um unerwünschte Elemente zu entfernen, die das Eindringen von Sprengstoffen in die Bohrlöcher behindern könnten;
- Scannen, Ladefläche (200)um jedes Bohrloch zu erkennen und jedem einen Standort zuzuweisen;
- Durchführung einer Bewertung des Inneren jedes Bohrlochs, um dessen physikalische Parameter zu ermitteln;
- Durchführung einer Zündung durch Kombination von Zündern mit Verstärkern und Laden jedes Zünders in ein entsprechendes Bohrloch;
- Positionierung einer Zündantenne außerhalb of an exposed end of jedes Bohrlochs;
- Einbringen eines Produkts Sprengmittel (140)in jedes Bohrloch und Durchführung eines Abdichtungsvorgangs an jedem Bohrloch covering an end exposed from each borehole generating a seal or plug, und
- Aktivierung der detonator Antennen mittels eines drahtlosen Signals, um die Detonation in jedem Bohrloch auszulösen.

30. Verfahren nach Anspruch 29, **dadurch gekennzeichnet, dass** es ferner den Schritt des Öffnens eines Gitters umfasst, in dem Fall, dass ein Bewehrungsgitter mit Bohrungen an der Vorderseite versehen ist, wodurch die Betätigung der verschiedenen Elemente durch System das Gitter ermöglicht wird.

31. Verfahren nach Anspruch 30, **gekennzeichnet durch** den Schritt des Herstellens einer Maschenöffnung, der das Verformen des Gewebes mittels einer Vorrichtung in Form eines Spiegels oder das Ausschneiden eines Abschnitts des Gewebes umfasst, um einen Raum zu schaffen, **durch** den die verschiedenen Elemente der System (100) zum Laden von Sprengstoffen verwendeten Vorrichtung hindurchtreten können.

32. Verfahren nach Anspruch 29, **dadurch gekennzeichnet, dass** der Schritt des Positionierens der System (100) zum Laden von Sprengstoffen vorgesehenen Vorrichtung ein Betätigungsmittel zum Bewegen (110) der System Vorrichtung mittels einer vom Steuerungssubsystem bereitgestellten Karte der Sprengzone umfasst.

33. Verfahren nach Anspruch 29, **dadurch gekennzeichnet, dass** das Verfahren zur Reinigung des Sockels der Ladefläche (200) Anlage Betätigungsmittel zum Entfernen von Bohrspänen oder -rückständen im Sockel oder in der unteren Zone der Anlage umfasst Ladefläche (200).

34. Verfahren nach Anspruch 29, **dadurch gekennzeichnet, dass** das Verfahren des Scannens Ladefläche (200) die Schritte des Ladefläche (200) dreidimensionalen Scannens der Bohrung mit Sensoren zur Erkennung jedes einzelnen Bohrlochs und der Zuordnung eines Standorts zu diesem umfasst.

35. Verfahren nach Anspruch 34, **dadurch gekennzeichnet, dass** der Scanvorgang die Ladefläche (200) folgenden Schritte umfasst:
- Durchführung eines allgemeinen Scans der Oberfläche mit Hilfe von LIDAR-Sensoren und einer Rückfahrkamera, um die Lage der Bohrlöcher zu bestimmen;
- die Oberfläche in Sektoren zu unterteilen und die Sensoren in jedem Sektor zu platzieren, um den jeweiligen Sektor abzutasten;
- Vergleich der Scan-Ergebnisse mit einem bereits vorhandenen Bohrlochdiagramm;
und
- falls Unstimmigkeiten festgestellt werden, wird ein Sensor oder eine TOF-Kamera, die sich näher an dem Bereich befindet, in dem die Unstimmigkeit festgestellt wurde, eingesetzt, um ein Bohrloch zu identifizieren.

36. Verfahren nach Anspruch 29, **dadurch gekennzeichnet, dass** der Schritt der Bewertung des Inneren jedes Bohrlochs den Schritt der Verwendung eines Trägheitssensors zur Ermittlung physikalischer Parameter des Bohrlochs und der Zufuhr von unter Druck stehender Flüssigkeit wie Wasser oder einem Wasser-Luft-Gemisch zur Reinigung jedes Bohrlochs umfasst.

37. Verfahren nach Anspruch 29, **dadurch gekennzeichnet, dass** der Vorbereitungs- und Beladungsprozess die folgenden Schritte umfasst:
- Entnahme eines Boosters und eines Zünders aus ihren jeweiligen Behältern, um sie in eine Zündvorrichtung einzusetzen;
- unter Verwendung eines Mechanismus, der die Durchführung des Zündvorgangs ermöglicht und den Zünder ordnungsgemäß mit dem jeweiligen Booster verbindet;
- die einzelnen Primer in die jeweiligen Bohrlöcher einführen und durch einen Ladeschlauch schieben; und
- Positionierung einer Zündantenne an der Außenseite jedes Bohrlochs.

38. Verfahren nach Anspruch 29, **dadurch gekennzeichnet, dass** der Vorbereitungs- und Beladungsprozess ferner die folgenden Schritte umfasst:
- Entnahme eines Dynamitsatzes aus einem Behälter;
- die Kopplung von zwei oder mehr Sprengkörpern in Reihe, abhängig von der gemessenen Länge jedes Bohrlochs;
- Einbringen von Dynamitvorrichtungen in ausgewählte Bohrlöcher an den Enden der Front.

39. Verfahren nach Anspruch 37, **dadurch gekennzeichnet, dass** der Schritt des Ladens von a Sprengmittel (140) eine Betätigungseinrichtung zum Zuführen von a Sprengmittel (140) zu jedem der Bohrlöcher durch den zum Laden von Sprengstoffen verwendeten Schlauch umfasst.

40. Verfahren nach Anspruch 29, **dadurch gekennzeichnet, dass** der sealing Vorgang jedes Bohrlochs darin besteht, dass Mittel verwendet werden, die inertes Material einbringen, das das freiliegende Ende jedes Bohrlochs bedeckt und nach Abschluss des Vorgangs des Ladens von Sprengstoff eine Abdichtung oder einen Verschluss bildet.

## Revendications

1. Système (100) pour le chargement d'explosifs dans un surface de chargement (200) site minier souterrain qui comprend :
- un sous-système de positionnement comprenant des moyens de déplacement (110) du system (100);
- un sous-système de nettoyage de la surface de chargement comprenant des moyens (123) pour éliminer les éléments indésirables susceptibles de gêner l'opération de chargement des explosifs dans les forages;
- un sous-système de balayage surface de chargement (200) comprenant des moyens de détection pour détecter des trous de forage dans la surface forée et attribuer un emplacement à chaque trou de forage;
- un sous-système de forage comprenant des moyens pour déterminer des paramètres physiques de chaque forage;
- un sous-système de nettoyage de forage comprenant des moyens de nettoyage de chaque forage pour procéder au chargement d'explosifs;
- un sous-système d'amorçage et de chargement comprenant des moyens de chargement d'un propulseur, d'un détonateur et/ou d'autres matériaux explosifs, en les plaçant dans chaque trou de forage, et en positionnant une antenne de détonateur à l'extérieur d'une extrémité exposée de chaque forage;
- un sous-système de chargement d'un agent de grenaillage (140) comprenant des moyens d'alimentation d'un agent de grenaillage (140) après que des explosifs ont été placés dans chaque forage;
- un sous-système d'étanchéité de trou de forage comprenant des moyens pour recouvrir the exposed end from chaque trou de forage, générant un joint ou un bouchon une fois l'opération de chargement d'explosifs terminée;
- un sous-système de détonation comprenant des moyens pour faire exploser chaque trou de forage chargé d'explosifs; et
- un sous-système de contrôle qui communique avec chacun des autres sous-systèmes et contrôle chacun des éléments de chargement et de détonation des explosifs.

2. Système (100) selon la revendication 1, **CARACTERISE en ce qu'**il comprend en outre un sous-système de guidage et d'ouverture de treillis pour les cas dans lesquels un treillis de renfort est prévu sur le surface de chargement (200), ce qui permet le fonctionnement des différents éléments du system à travers le treillis.

3. Système (100) selon la revendication 2, **CARACTÉRISÉ en ce que** le sous-système de guidage et d'ouverture de maille comprend un dispositif sous la forme d'un spéculum constitué de deux ou plusieurs pièces qui sont ouvertes par un mécanisme d'entraînement, déformant la maille et créant un espace pour le système (100) pour le passage des éléments.

4. Système (100) selon la revendication 3, **CARACTÉRISÉ en ce que** le sous-système d'ouverture et de guidage de maille comprend en outre un outil de coupe, pour les cas où il n'y a pas suffisamment d'espace pour l'insertion du dispositif en forme de spéculum.

5. Système (100) selon la revendication 1, **CARACTERISE en ce que** le sous-système de positionnement comprend un véhicule opéré par navigation autonome ou semi-autonome, ou par téléopération, et comprend des moyens de déplacement (110) et de placement des différents éléments composant le système (100) pour le chargement d'explosifs.

6. Système (100) selon la revendication 5, **CARACTÉRISÉ en ce que** le sous-système de positionnement fonctionne en utilisant une carte de la zone, qui est fournie par le sous-système de commande, à partir de laquelle le sous-système de positionnement actionne divers éléments pour se déplacer le système (100) de manière autonome ou semi-autonome dans le site minier souterrain.

7. Système (100) selon la revendication 1, **caractérisé en ce que** le sous-système de nettoyage de la surface de chargement comprend des moyens (123) pour éliminer les débris ou résidus à la base ou au fond de la surface.

8. Système (100) selon la revendication 7, **CARACTÉRISÉ en ce que** les moyens de nettoyage des débris sont choisis dans un groupe constitué par l'utilisation de tuyaux d'alimentation en eau et/ou en air sous pression, ou l'utilisation d'éléments mobiles sous forme de brosses et/ou de pelles.

9. Système (100) selon la revendication 1, **CARACTÉRISÉ en ce que** le sous-système de balayage surface de chargement (200)comprend des capteurs qui balayent la surface de manière tridimensionnelle, et détectent chaque trou de forage et attribuent un emplacement dans un modèle numérique.

10. Système (100) selon la revendication 9, **CARACTÉRISÉ en ce que** les capteurs sont déplacés par des bras robotisés (120), le bras se déplaçant dans différentes positions pour balayer toute la surface.

11. Système (100) selon la revendication 10, **CARACTÉRISÉ en ce que** le sous-système comprend l'utilisation de capteurs LIDAR, de capteurs TOF, de caméras et autres.

12. Système (100) selon la revendication 1, **caractérisé en ce que** le sous-système de forage comprend un capteur inertiel qui établit des paramètres tels que la longueur et l'inclinaison du trou de forage, le capteur étant placé à l'extrémité d'un élément de forage permettant d'effectuer diverses mesures à mesure que le capteur est inséré dans chaque trou de forage.

13. Système (100) selon la revendication 12, **caractérisé en ce que** le sous-système de nettoyage de forage comprend des moyens permettant d'identifier l'état de propreté de chaque forage et de nettoyer chaque forage pour procéder au chargement d'explosifs.

14. Système (100) selon la revendication 1, **caractérisé en ce que** le sous-système d'amorçage et de chargement comprend un dispositif d'amorçage, un ou plusieurs bras robotisés (120), un conteneur de surpresseur (130)et un conteneur de détonateur (131). Le bras robotisé prend un surpresseur du conteneur de surpresseur (130) pour le placer dans le dispositif d'amorçage, puis prend un détonateur du conteneur de détonateur (131) pour le placer devant le surpresseur dans le dispositif d'amorçage, pour effectuer une opération d'amorçage, puis placer l'objet amorcé à l'extrémité du bras robotisé.

15. Système (100) selon la revendication 14, **caractérisé en ce que** le sous-système d'amorçage et de chargement comprend en outre un mécanisme effectuant l'opération d'amorçage, qui couple le détonateur au propulseur à l'intérieur du dispositif d'amorçage.

16. Système (100) selon la revendication 15, **CARACTÉRISÉ en ce que** le bras robotisé positionne l'objet amorcé à l'intérieur d'un trou de forage dans la surface en utilisant des moyens de poussée qui poussent l'objet amorcé dans le trou de forage.

17. Système (100) selon la revendication 14, **caractérisé en ce que** le sous-système d'amorçage et de chargement comprend en outre le chargement d'éléments explosifs de type dynamite, le sous-système d'amorçage et de chargement positionnant les éléments de dynamite dans les trous de forage aux extrémités de la surface et comprenant des moyens d'insertion et de connexion en série de différents dispositifs de type dynamite dans chaque trou de forage.

18. Système (100) selon la revendication 16, **CARACTERISE en ce que**, après que l'objet amorcé a été placé, le sous-système de chargement d'un agent de grenaillage (140) actionne un tuyau pour le faire reculer dans le trou de forage et alimente simultanément un agent de grenaillage (140), chargeant le agent de grenaillage (140) lorsque le tuyau est retiré du trou de forage.

19. Système (100) selon la revendication 18, **CARACTÉRISÉ en ce que** le sous-système de chargement de l'agent de grenaillage (140) comprend des conteneurs d'agent de grenaillage et des moyens de pressurisation permettant d'alimenter l'agent de grenaillage à travers le tuyau.

20. Système (100) selon la revendication 18, **caractérisé en ce que** le sous-système de chargement du agent de grenaillage (140) comprend un système system de préparation du agent de grenaillage (140) comprenant des moyens pour loger les composants nécessaires à la fabrication du agent de grenaillage (140), préparer le mélange desdits composants, et permettre l'alimentation de agent de grenaillage (140) chaque forage en surface.

21. Système (100) selon la revendication 20, **CARACTÉRISÉ en ce que** le système pour prépare des agent de grenaillage (140) comprend récipients qui abritent les composants pour la fabrication de l'anneau agent de grenaillage (140), des moyens de mélange et des moyens de pompage qui permettent de transférer les composants vers les moyens de mélange et de transférer le mélange vers chaque forage en surface.

22. Système (100) selon la revendication 21, **CARACTÉRISÉ en ce que** le système pour prépare des agent de grenaillage (140) comprend outre des tuyaux qui permettent le transfert de la préparation agent de grenaillage (140) vers les forages en surface, à l'aide des bras robotisés (120).

23. Système (100) selon la revendication 22, **CARACTÉRISÉ en ce que** le système pour prépare de agent de grenaillage (140) communique avec le sous-système de contrôle, ce qui permet de contrôler automatiquement le processus de agent de grenaillage préparation.

24. Système (100) selon la revendication 1, **caractérisé en ce que** le sous-système d'étanchéité de trou de forage comprend des moyens that introduce inert material recouvrant l' exposed extrémité of de chaque trou de forage, générant theun joint ou un bouchon une fois l'opération de chargement d'explosifs terminée.

25. Système (100) selon la revendication 24, **CARACTÉRISÉ en ce que** les moyens recouvrant chaque forage sont placés à l'extrémité d'un bras robotisé.

26. Système (100) selon la revendication 1, **caractérisé en ce que** le sous-système de détonation comprend des moyens permettant l'activation des antennes détonateur placées sur les détonateurs à l'extérieur de chaque forage.

27. Système (100) selon la revendication 26, **CARACTÉRISÉ en ce que** le sous-système de détonation comprend l'utilisation de systèmes de détonation sans fil et filaires.

28. Système (100) selon la revendication 26, **CARACTERISE en ce que** les moyens utilisés sont basés sur des signaux optiques, par l'intermédiaire d'un faisceau lig codé ht, ou d'autres types de signaux sans fil.

29. Procédé de chargement d'explosifs dans un surface de chargement (200) site minier souterrain, le procédé comprenant les étapes suivantes:
- positionnement d'un système (100) de chargement d'explosifs à l'intérieur d'un site minier souterrain selon l'une quelconque des revendications 1 à 24;
- effectuer un procédé de nettoyage du fond des forages surface de chargement (200) afin d'en éliminer les éléments indésirables susceptibles d'obstruer l'entrée des explosifs dans les forages;
- scanner surface de chargement (200) pour détecter chaque forage et attribuer un emplacement à chacun d'eux;
- effectuer une évaluation de l'intérieur de chaque forage afin d'en établir les paramètres physiques;
- effectuer une opération d'amorçage en combinant des détonateurs avec des propulseurs et en chargeant chaque amorce dans un trou de forage respectif;
- positionnement d'une antenne détonatrice à l'extérieur of an exposed end of de chaque forage;
- charger un agent de grenaillage (140) dans chaque trou de forage et exécuter une opération de scellement de chaque trou de forage covering an end exposed from each borehole generating a seal or plug, et
- activer les detonator antennes au moyen d'un signal sans fil de manière à provoquer la détonation dans chaque forage.

30. Procédé selon la revendication 29, **caractérisé en ce qu'**il comprend en outre l'étape consistant à réaliser une ouverture de maille, dans les cas où une maille de renfort est prévue avec les trous de perçage sur le devant, ce qui permet le fonctionnement des différents éléments de la system maille à travers celle-ci.

31. Procédé selon la revendication 30, **caractérisé en ce que** l'étape de réalisation d'une ouverture de maille comprend la déformation de la maille au moyen d'un dispositif en forme de spéculum, ou la découpe d'une section de la maille de manière à créer un espace à travers lequel system (100) peuvent passer les différents éléments de l'engin servant au chargement des explosifs.

32. Procédé selon la revendication 29, **CARACTÉRISÉ en ce que** l'étape de positionnement du dispositif system (100) de chargement d'explosifs comprend des moyens d'actionnement pour déplacer (110) le dispositif system en fonction d'une carte de la zone de tir fournie par le sous-système de commande.

33. Procédé selon la revendication 29, **CARACTÉRISÉ en ce que** le procédé de nettoyage de la base du surface de chargement (200) comprend des moyens d'actionnement pour éliminer les débris ou résidus de forage dans la base ou la zone inférieure du surface de chargement (200).

34. Procédé selon la revendication 29, **CARACTÉRISÉ en ce que** le procédé de balayage surface de chargement (200) comprend les étapes consistant à utiliser des capteurs pour balayer le surface de chargement (200) de manière tridimensionnelle afin de détecter chaque trou de forage et à lui attribuer un emplacement.

35. Procédé selon la revendication 34, **caractérisé en ce que** le procédé de numérisation surface de chargement (200) comprend les étapes suivantes:
- réaliser un balayage général de la surface à l'aide de capteurs LIDAR et d'une caméra de recul afin d'attribuer l'emplacement des forages;
- diviser la surface en secteurs et placer les capteurs dans chaque secteur afin de scanner le secteur spécifique;
- comparer les résultats de l'analyse avec un diagramme de forage préexistant; et
- en cas de détection d'écarts, à l'aide d'un capteur ou d'une caméra TOF disponible au plus près de la zone où l'écart a été constaté, afin d'identifier un forage.

36. Procédé selon la revendication 29, **caractérisé en ce que** l'étape d'évaluation de l'intérieur de chaque trou de forage comprend l'utilisation d'un capteur inertiel pour établir les paramètres physiques du trou de forage et l'alimentation en fluide sous pression tel que de l'eau ou un mélange d'eau et d'air pour effectuer un nettoyage de chaque trou de forage.

37. Procédé selon la revendication 29, **caractérisé en ce que** le procédé d'amorçage et de chargement comprend les étapes suivantes:
- prendre un propulseur et un détonateur dans leurs conteneurs respectifs pour les placer dans un dispositif d'amorçage;
- en utilisant un mécanisme permettant d'effectuer l'opération d'amorçage, en couplant correctement le détonateur avec le propulseur respectif;
- positionner chaque amorce à l'intérieur d'un trou de forage respectif et la pousser à travers un tuyau de chargement; et
- positionnement d'une antenne détonatrice à l'extérieur de chaque forage.

38. Procédé selon la revendication 29, **caractérisé en ce que** le procédé d'amorçage et de chargement comprend en outre les étapes suivantes:
- prendre un engin de dynamite dans un conteneur;
- couplage en série de deux ou plusieurs dispositifs de type dynamite, en fonction de la longueur enregistrée de chaque forage;
- insertion d'engins dynamiteurs dans des forages sélectionnés aux extrémités du front.

39. Procédé selon la revendication 37, **CARACTÉRISÉ en ce que** l'étape de chargement d'un agent de grenaillage (140) comprend des moyens d'actionnement pour alimenter en un gaz agent de grenaillage (140) chacun des trous de forage par l'intermédiaire du tuyau utilisé pour le chargement des explosifs.

40. Procédé selon la revendication 29, **CARACTÉRISÉ en ce que** l' sealing opération de chaque forage consiste à utiliser des moyens qui introduisent un matériau inerte recouvrant l'extrémité exposée de chaque forage, générant un joint ou un bouchon une fois l'opération de chargement d'explosifs terminée.
